# EUROPEAN PATENT SPECIFICATION

(11) **EP 3 379 436 B1**
(45) Date of publication and mention of the grant of the patent: **05.10.2022**
(21) Application number: 18162079.0
(22) Date of filing: 15.03.2018
(51) Int. Cl.: G01R 31/28, G01R 31/58, G06F 30/18, G06F 113/16, G01R 31/00

(54) **METHOD AND APPARATUS FOR TESTING DESIGN OF SATELLITE WIRING HARNESS AND SIGNAL PROCESSING UNITS**
VERFAHREN UND VORRICHTUNG ZUM TESTEN DES DESIGNS VON SATELLITENKABELBAUM- UND SIGNALVERARBEITUNGSEINHEITEN
PROCÉDÉ ET APPAREIL POUR TESTER LA CONCEPTION DE FAISCEAU DE CÂBLAGE PAR SATELLITE ET UNITÉS DE TRAITEMENT DE SIGNAL

(30) Priority: 24.03.2017 US 201715469137
(43) Date of publication of application: 26.09.2018
(73) Proprietor: The Boeing Company, Chicago, IL 60606-2016 (US)
(72) Inventor: ANGELICO, Villy, Chicago, IL 60606-1596 (US); DALE, Timothy J., Chicago, IL 60606-1596 (US); DUONG, Thanh P., Chicago, IL 60606-1596 (US); HENROID, John L., Chicago, IL 60606-1596 (US); KHAN, Adeel, Chicago, IL 60606-1596 (US); KROHN, Randall J., Chicago, IL 60606-1596 (US); MAH, Roland, Chicago, IL 60606-1596 (US); MCLEAN, Jill, Whitesboro, NY 13492 (US); TRAPP, Bradley J., Chicago, IL 60606-1596 (US)
(74) Representative: Plasseraud IP

(56) References cited:
- US-A1- 2009 064 068
- US-A1- 2010 030 546

## Description

### TECHNOLOGICAL FIELD

The present disclosure relates generally to satellite communications systems and, in particular, to satellite design and manufacturing.

### BACKGROUND

Satellites are used in a variety of diverse fields such as for navigation, communication, environmental monitoring, weather forecasting, broadcasting and the like. Many homes, businesses, government organizations and other users may use satellites on a daily basis for entertainment, communication, information gathering and other purposes. Hundreds of man-made satellites now orbit the earth, and more are launched each year.

A typical modern satellite may include a metal or composite frame that carries one or more antennas, power sources such as solar cells and batteries, and various electronic components including modules of communications circuitry implemented by satellite payload transponders. These modules are numerous and may include telemetry and command modules, and modules of radio frequency (RF) communications circuitry including telemetry and command functionality that are respectively monitored and commanded by the telemetry modules and command modules. The telemetry and command modules are often connected to the modules of RF communications circuitry by wiring harnesses, and modules of RF communications circuitry are often interconnected by RF links.

The design and manufacture of a satellite often includes payload design, and a payload test program to validate and verify the payload design. Payload design currently includes calculation of integrated payload performance predictions based on unit design performance predictions. The nature of predictions forces payload engineers to design in conservatism to ensure actual end item performance. This conservatism has often forced the satellite to be larger than needed for power, size, weight, and unit redundancy - all of which are direct cost drivers to the overall program costs and affordability.

In order to define a payload test program, there needs to be a design. During proposal or even program baseline, the design is more conceptual with numerous assumptions on the design results. Because of the lack of design definition, the test program is based on assumptions that are not valid resulting in unidentified impacts to testability, test complexity, test scope, test software and Special Test Equipment (STE) capability. This is a direct source of recurring cost and schedule overruns on programs.

For wiring harnesses, the harness design to build engineering translation is not currently validated, and is instead assumed to be correct. Harness design errors often discovered during spacecraft integration and systems test causing harness rework, retesting, and impacting program schedule and cost baselines. It is a challenge to complete the harness interface audit before spacecraft systems test due to the satellite systems engineering database (SSED) not being available, and due to the intensive manual effort exceeding the allocated time before spacecraft systems test.

Therefore it would be desirable to have a system and method that takes into account at least some of the issues discussed above, as well as other possible issues. US2010/030546, according to its abstract, computer aided design (CAD) techniques to implement a unified data schema and graphical user interface (GUI) to link ECU/devices, in-vehicle communications, and vehicle harness information together with respect to architectural relation, performance relation, and cost relation, and to facilitate a designer's understanding and manipulation of this information. The domain-specific information from each domain is converted to objects in this unified data schema and stored in a unified database that is accessible to every domain, so that the impact of the current state in the device domain can be accessed and analyzed by a designer from any domain. This approach enables design data sharing and real-time collaboration between different electrical/electronic (E/E) design domains, thereby facilitating the realization of design data collaboration, design change management, and product lifetime management (PLM) and product data management (PDM) implementation.. US2009/064068 according to its abstract, an integrated circuit (IC) floorplan system includes an integration design system that executes IC floorplan software on a semiconductor die IC model. The IC floorplan software includes a timing tool database of the IC model. IC integrators utilize the IC floorplan software to evaluate logic block moves within the IC model. The IC floorplan software analyzes wire interconnect signal propagation time delays that result from prospective logic block moves with the IC model. The IC floorplan software reports back in real time whether or not a prospective move of a logic block from one location to another in the IC model will cause a timing failure due to a wire interconnect time delay exceeding a predetermined timing parameter,.

### BRIEF SUMMARY

Some example implementations of the present disclosure provide a system, and corresponding method and computer-readable storage medium for testing designs of wiring harnesses such as those designed for a satellite. In some example implementations, satellite test procedures are executed via integrated virtual modules of communications circuitry including telemetry and command modules, virtual wiring harnesses, and a suite of test cases to traverse the harness paths and validate that commands sent and telemetry received are sourced and received by the correct modules. Example implementations address one objective by validating the harness design engineering, the harness manufacturing engineering, the satellite database and the test procedures together as they are actually implemented to translate between design and build. And example implementations address another objective by automating a manual intensive process and enabling the harness interface audit to be completed before spacecraft systems test as intended.

In a first aspect, there is provided a method of testing designs of wiring harnesses according to claim 7.

In some example implementations of the method of any preceding or any subsequent example implementation, or any combination thereof, the virtual modules include a virtual module with a redistribution point embodied as a switch with multiple inputs and a single output, each of the multiple inputs to the single output being on a separate one of the signal pathways.

In some example implementations of the method of any preceding or any subsequent example implementation, or any combination thereof, executing the testing application to generate the displayable output includes executing the testing application to generate the displayable output that further includes for each error, routing data for the simulated signal that identifies one or more of the specific electrical connections at which the receipt of the simulated signal is verified, and the particular electrical connection at which the receipt of the simulated signal is not verified.

In some example implementations of the method of any preceding or any subsequent example implementation, or any combination thereof, when the receipt of the simulated signal is not verified, the method further comprises re-executing the modeling application to generate a modified virtual electrical system in which the particular virtual wiring harness has functionality equivalent to a modified design that corrects the error; and re-executing the testing application to test the signal pathways through the modified virtual electrical system.

In some example implementations of the method of any preceding or any subsequent example implementation, or any combination thereof, executing the testing application includes executing the testing application to further transmit the displayable output to a visualization tool configured to display the virtual electrical system and identify thereon the particular electrical connection at which the error occurred, and the particular virtual wiring harness and the particular virtual module respectively connected to and including the particular electrical connection.

In some example implementations of the method of any preceding or any subsequent example implementation, or any combination thereof, executing the testing application includes executing the testing application to generate the displayable output that in an instance in which receipt of the simulated signal by the specific electrical connections is verified, indicates the designs of wiring harnesses are validated for production of the wiring harnesses based thereon.

In a second aspect, there is provided an apparatus for testing designs of wiring harnesses according to claim 1.

Some example implementations provide a computer readable storage medium for testing designs of wiring harnesses. The computer-readable storage medium is non-transitory and having computer-readable program code portions stored therein that, in response to execution by a processor, cause an apparatus to at least perform the method of any preceding example implementation, or any combination thereof.

These and other features, aspects, and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope of the disclosure in any way. Other example implementations, aspects and advantages will become apparent from the following detailed description taken in conjunction with the accompanying drawings which illustrate, by way of example, the principles of some described example implementations.

### BRIEF DESCRIPTION OF THE DRAWING(S)

Having thus described example implementations of the disclosure in general terms, reference will now be made to the accompanying drawings, which are not necessarily drawn to scale, and wherein:
FIG. 1 illustrates a system according to example implementations of the present disclosure;
FIG. 2 illustrates a wiring harness subsystem of the system of FIG. 1., according to some example implementations;
FIG. 3 illustrates an example of a suitable virtual electrical system generated by a modeling application of the wiring harness subsystem of FIG. 2, according to example implementations;
FIG. 4 illustrates an example implementation of the wiring harness subsystem of FIG. 2 in the form of a harness validation tool, according to example implementations;
FIGS. 5, 6 and 7 illustrate example directed graphs according to example implementations;
FIG. 8 is an example of the content of a harness traversal output file according to example implementations;
FIG. 9 is a flowchart illustrating various steps in a method of testing designs of wiring harnesses, according to various example implementations; and
FIG. 10 illustrates an apparatus according to some example implementations.

### DETAILED DESCRIPTION

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. For example, unless otherwise indicated, reference to something as being a first, second or the like should not be construed to imply a particular order. Also, for example, reference may be made herein to quantitative measures, values, relationships or the like (e.g., planar, coplanar, perpendicular). Unless otherwise stated, any one or more if not all of these may be absolute or approximate to account for acceptable variations that may occur, such as those due to engineering tolerances or the like. Like reference numerals refer to like elements throughout.

Example implementations of the present disclosure are directed to testing designs of communications circuitry such as a design of a satellite payload transponder with modules of radio frequency (RF) communications circuitry including telemetry and command functionality, and testing designs of wiring harnesses such as those designed for a satellite.

Satellites and a number of other complex electrical and electromechanical systems are composed of electronics including modules of communications circuitry implemented by the satellite design. These modules are numerous and may include telemetry and command modules and the like, and modules of RF communications circuitry including telemetry and command functionality that are respectively monitored and commanded by the telemetry modules and command modules. Examples of suitable telemetry and command modules include remote telemetry and command unit (RTCU), embedded telemetry module (ETM), embedded command module (ECM), central telemetry and command unit (CTCU) and the like. The telemetry and command modules are often connected to the modules of RF communications circuitry by wiring harnesses, and modules of RF communications circuitry are often interconnected by RF links. Example implementations of the present disclosure provide a system for testing designs of electrical, electromechanical and RF communication systems such as satellites.

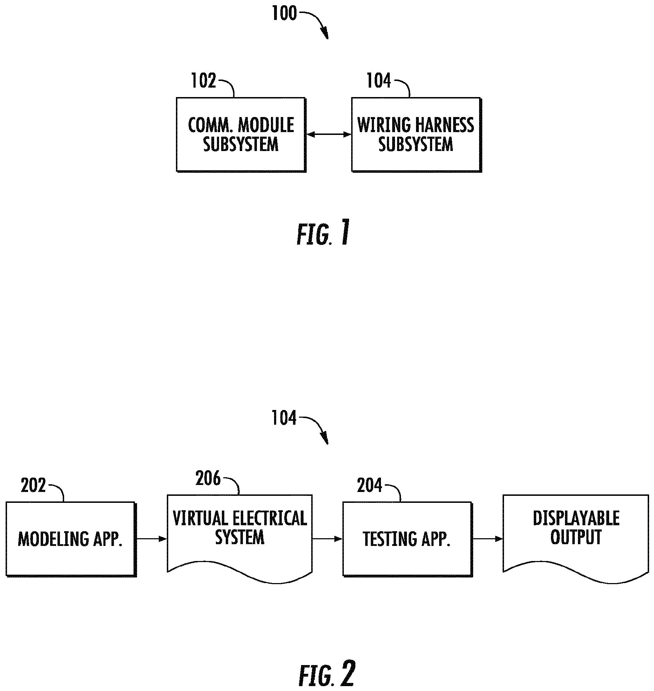

FIG. 1 illustrates a system **100** according to example implementations of the present disclosure. The system is configured to perform a number of different functions or operations, either automatically, under direct operator control, or some combination of thereof. In this regard, in some examples, the system is configured to perform one or more of its functions or operations automatically, that is, without being directly controlled by an operator. Additionally or alternatively, in some examples, the system is configured to perform one or more of its functions or operations under direct operator control.

The system **100** includes one or more of each of any of a number of different subsystems (each an individual system) for performing one or more of its functions or operations. In some examples, the system includes a communications module subsystem **102** and a wiring harness subsystem **104** coupled to one another. Although being shown together as part of the system, it should be understood that either of the subsystems may function or operate as a separate system without regard to the other. And further, it should be understood that the system may include one or more additional or alternative subsystems than those shown in FIG. 1.

The communications module subsystem **102** is generally configured to test designs of communications circuitry such as a design of a satellite payload transponder with modules of RF communications circuitry including telemetry and command modules. More information regarding the communications module is provided in U.S. Patent Application No. 15/469084, entitled: *Method and Apparatus for Testing RF Performance of a Satellite Wiring Harness and Signal Processing Units,* filed concurrently herewith, the content of which is incorporated herein by reference.

The wiring harness subsystem **104** is generally configured to test designs of wiring harnesses such as those designed for a satellite. FIG. 2 more particularly illustrates the wiring harness subsystem according to some example implementations of the present disclosure. The wiring harness subsystem includes one or more of each of any of a number of different sub-subsystems (each an individual system or subsystem) for performing one or more of its functions or operations. As shown, in some examples, the wiring harness subsystem includes a modeling application **202** and a testing application **204.** Although being shown together as part of the system, it should be understood that either of the sub-subsystems may function or operate as a separate system or subsystem without regard to the other. And further, it should be understood that the wiring harness subsystem may include one or more additional or alternative sub-subsystems than those shown in FIG. 2.

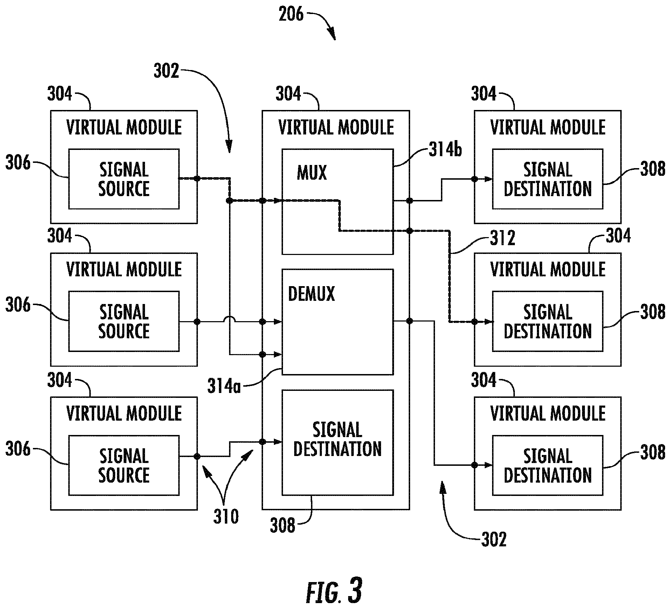

According to example implementations, the modeling application **202** is executable to generate a virtual electrical system **206.** FIG. 3 illustrates an example of a suitable virtual electrical system. As shown, the virtual electrical system includes virtual wiring harnesses **302** that interconnect virtual modules **304** of communications circuitry including telemetry and command modules. As generated by the modeling application, the virtual wiring harnesses have functionality equivalent to that of the designs of wiring harnesses.

As also shown in FIG. 3, the virtual modules **304** have signal sources **306,** signal destinations **308** and redistribution points therebetween. The virtual modules also have electrical connections **310** (only two of which is called out in the figure) to the signal sources, signal destinations and redistribution points. The virtual wiring harnesses are connected to the electrical connections and thereby form signal pathways **312** (one example of which is shown) through the virtual electrical system including at least the telemetry and command modules. According to example implementations, each signal pathway is defined by respective electrical connections to a signal source, signal destination and any redistribution point therebetween, and by at least one of the virtual wiring harnesses connected to the respective electrical connections.

In some examples, the virtual modules **304** include a virtual module with a redistribution point embodied as a switch such as a demultiplexer **314a** with multiple inputs and a single output, with each of the multiple inputs to the single output being on a separate one of the signal pathways. Additionally or alternatively, in some examples, the virtual modules include a virtual module with a redistribution point embodied as a switch such as a multiplexer **314b** with a single input and multiple outputs, with the signal input to each of the multiple outputs being on a separate one of the signal pathways.

Returning to FIG. 2, the testing application **204** is executable to test the signal pathways **312** and thereby the virtual wiring harnesses **302.** This includes each signal pathway having thereon specific electrical connections **310** to a signal source **306,** signal destination **308** and any redistribution point **314a, 314b** therebetween. For each signal pathway, the testing application is executed to at least generate a simulated signal that is input to the specific electrical connection at the signal source (the specific electrical connection to the signal source) and routed ( intended to be routed) through the signal pathway to the specific electrical connection to the signal destination.

The testing application **204** is executed to also verify receipt of the simulated signal by the specific electrical connections **310** via the signal pathway **312.** In an instance in which receipt of the simulated signal is not verified, the testing application is also to identify a particular electrical connection of the specific electrical connections **310** at which an error occurred in the receipt of the simulated signal, and identify a particular virtual wiring harness **302** and a particular virtual module **304** respectively connected to and including the particular electrical connection.

As or after each signal pathway **312** is tested, the testing application **204** is to further generate a displayable output that identifies for each error, the particular electrical connection **310** at which the error occurred, and the particular virtual wiring harness **302** and the particular virtual module **304** respectively connected to and including the particular electrical connection. In some examples, the displayable output further includes for each error, routing data for the simulated signal that identifies one or more of the specific electrical connections at which the receipt of the simulated signal is verified. In some examples in which receipt of the simulated signal by the specific electrical connections is verified, the displayable output indicates the designs of wiring harnesses are validated for production of the wiring harnesses based thereon.

In some examples, the testing application **204** is to further transmit the displayable output to a visualization tool configured to display the virtual electrical system **206.** In these examples, the visualization tool is configured to identify on the display of the virtual electrical system, the particular electrical connection **310** at which the error occurred, and the particular virtual wiring harness **302** and the particular virtual module **304** respectively connected to and including the particular electrical connection.

In some examples when the receipt of the simulated signal is not verified, the design of the particular virtual wiring harness **302** may be modified and the modeling and testing applications **202, 204** rerun. In these examples, the modeling application is re-executed to generate a modified virtual electrical system in which the particular virtual wiring harness has functionality equivalent to a modified design that corrects the error. And the testing application is re-executed to test the signal pathways through the modified virtual electrical system.

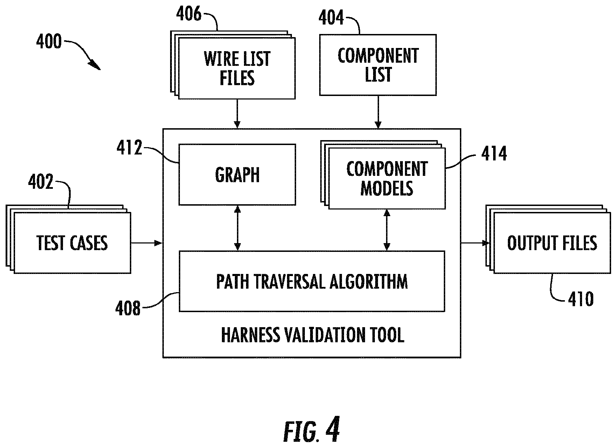

To further illustrate example implementations of the present disclosure, FIG. 4 illustrates an example implementation of the wiring harness subsystem **104** embodied as a harness validation tool **400** to test and validate an electrical system of hardware components including modules of communications circuitry. The inputs to the tool are a suite of test cases **402,** a component file **404** detailing the list of the underlying components to be modeled, and wire list files **406** that list all wires of the wiring harness(es) that fully describe the electrical system under test. This procedure can be performed before the physical hardware components are fabricated, providing early error detection. In some examples, the individual hardware components all have unique identifiers, but multiple instances of each type of hardware component can exist. In these examples, each wire that is used to describe the electrical system also has a unique identifier, and contains both starting and ending electrical connection points. The hardware component unique identifier may be derivable from the wires starting and ending connection points.

In some examples, the suite of test cases **402** is designed with the goal of achieving full system wiring coverage. In some examples in which the electrical system is that of a satellite, the test cases may be exported from a satellite systems engineering database (SSED). Each test case is generally a representation of a signal sent through the system from a signal source. The tool **400** includes a recursive signal pathway traversal algorithm **408** that uses this signal source as a point of origin for a signal pathway through the electrical system. At the completion of each test case, the tool provides an output file **410** with details such as signal paths traversed, errors reported and components encountered. This information can be used to identify connection errors and provide test coverage to verify system wiring.

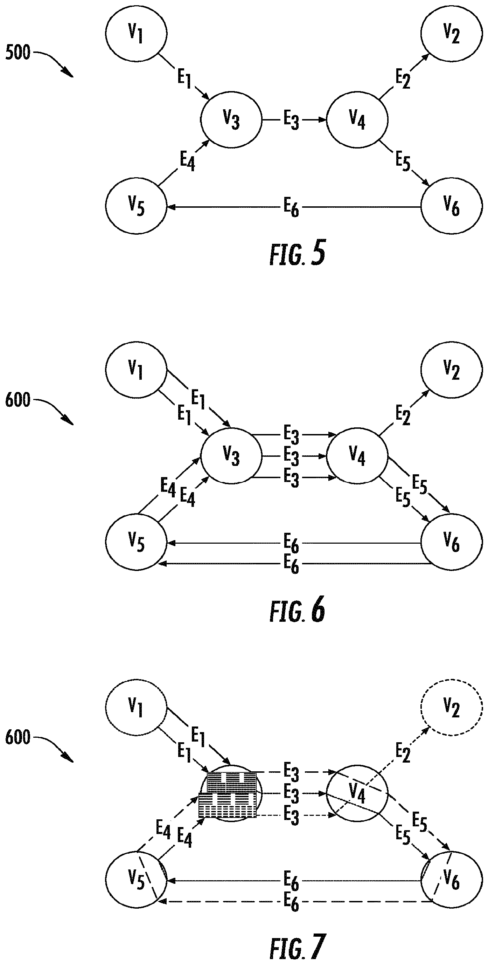

Using the wire list files **404** that describe the wiring within the hardware system, and implementing the modeling application **202,** the tool **400** is configured to create a directed graph **412** that serves as a model of the electrical system under test (virtual electrical system). FIGS. 5 and 6 illustrate example directed graphs **500, 600.** A vertex represents an underlying component with one or more incoming and/or outgoing connection points, and an edge represents a wire between the underlying connection points. The directed graph **500** in FIG. 5 is a basic graph with one edge per connection, whereas the directed graph **600** in FIG. 6 is a more advanced graph with multiple edges that may represent redundancy within the electrical system.

Also needed for the graph **412** to be completed is a series of virtual component models **414** that represent the hardware components (virtual modules of communications circuitry). These virtual component models are capable of adding multiple edges to the graph as well as routing input to output pins (electrical connections). The tool **400** can add logic per a component connection point as deemed necessary to provide additional component validation. FIG. 7 illustrates the directed graph **600** of FIG. 6, but with added connections with signal routing logic in the vertices representing the hardware components.

Once the graph **412** is constructed it can be used by the recursive signal pathway traversal algorithm **408** to determine all the wires that are traversed for a particular test case **402,** and which may implement the testing application **204.** The goal at the end of running a full suite of test cases is to determine coverage of all wires in the electrical system under test. The process of running a test case through the electrical system includes providing the tool **400** with a test case identifier that directly or indirectly references a particular hardware component and electrical connection that would transmit the signal into the physical electrical system. Using that electrical connection to a signal source as a starting location, the recursive signal pathway traversal algorithm is used to traverse every connection that is connected to the starting electrical connection.

The algorithm **408** operates by looping through every connection that is connected to the starting electrical connection. In some examples, these connections are known as level-1 connections. For each level-1 connection, the algorithm calls itself finding each electrical connection associated with that level-1 connection, which connections in some examples are known as level-2 connections. This process continues down until all electrical connections associated with the starting electrical connection have been identified and traversed.

During the process of traversing all of the identified electrical connections, the algorithm **408** will run into cases where an electrical connection has no additional electrical connections. These electrical connections are where the component input/output connection routing comes into play. Using information found in the electrical connection, a unique component identifier can be derived allowing for the specific component instance to be determined. And once the component instance is determined, the algorithm can continue through the virtual component model using its logic.

When a virtual component model **414** is created, the function of each electrical connection and how it should respond to the algorithm **408** entering on that electrical connection is known. The virtual component model can be setup to report an error, continue the traversal, stop the traversal, or any application-specific operation deemed necessary or otherwise appropriate. For example, if a component contains a selectable path (e.g., demultiplexer **314a,** multiplexer **314b),** the it can be modeled by either traversing all potential output paths or maintaining knowledge of the selected output path and only traversing it. If the component has been modeled to continue traversing, a set of output electrical connections that are associated with the electrical connection the algorithm arrived on is provided; otherwise, this connection would be the breakout condition for the algorithm. For each output electrical connection that is setup, the traversal continues from it. The process of traversing and entering / exiting components continues until every electrical connection that is related to the starting electrical connection has been traversed.

The algorithm **408** also maintains a record of various activities that occurred during the traversal. In some examples, these activities include electrical connections traversed, components entered / exited, errors encountered, or anything else deemed necessary or otherwise appropriate. This record is exported to an output file **410** after the completion of a test case **402.** This provides a report about which test cases passed and failed, what issues were encountered during the traversal and the exact pathway that was traversed during each test case. These reports could be used to modify the wiring information based on errors encountered or to be used as proof of full coverage of wires in the system. Alternatively, these reports may be displayed to assist in debugging system wiring issues.

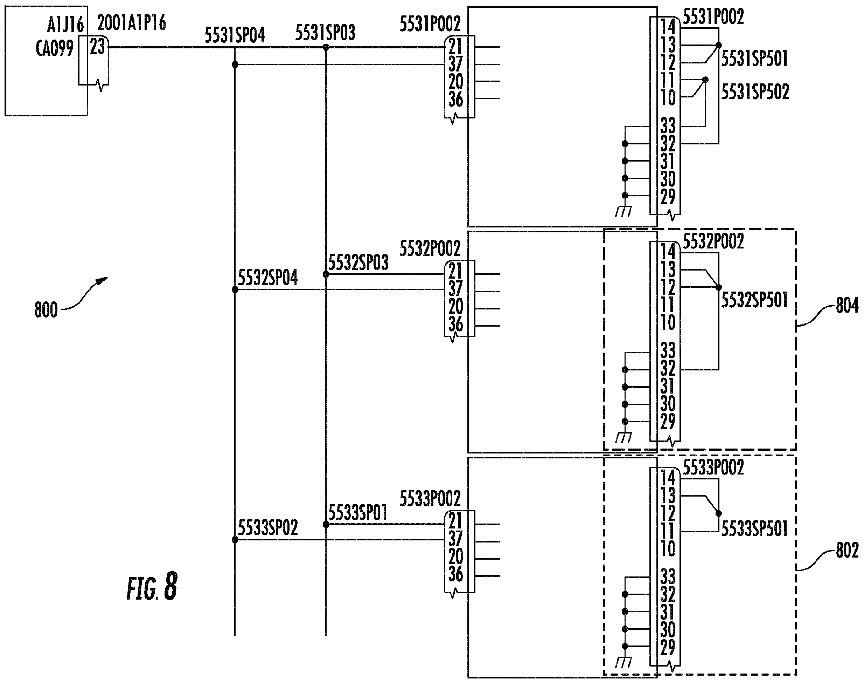

FIG. 8 is an example of displayable content **800** of a harness traversal output file **410** according to example implementations. As shown, the traversal originates from the component with electrical connector 2001A2P16-23, passed through a splice to three signal destinations. The original traversal failed at the intended signal destination (see box **802)** because the address lines weren't correctly terminated with a ground (see box **804).** The command was intended for the component with the red box.
Primary YYY - Primary Channel
Command: XXXX_Reset
2001A1P16-23 -> 5531SP03-A (60338)
5531SP03-A -> 5531P002-21 (60301)
Entering component XXXX urd 5531 on connector 5531P002 pin 21
5531SP03-A -> 5532SP03-A (60340)
5532SP03-A -> 5532P002-21 (60303)
Entering component XXXX urd 5532 on connector 5532P002 pin 21
5532SP03-A -> 5533SP01-A (60342)
5533SP01-A -> 5533P002-21 (60305)
Entering component XXXX urd 5533 on connector 5533P002 pin 21

The design was subsequently corrected and the wire list **404** modified. The command traversal now correctly reaches the intended signal destination with the destination address bits matching the hardware address. The traversal ends with this next entry logged:
XXXX_Reset (0x6D0F) executed on XXXX (5533)
Command XXXX_Reset executed via serial interface.

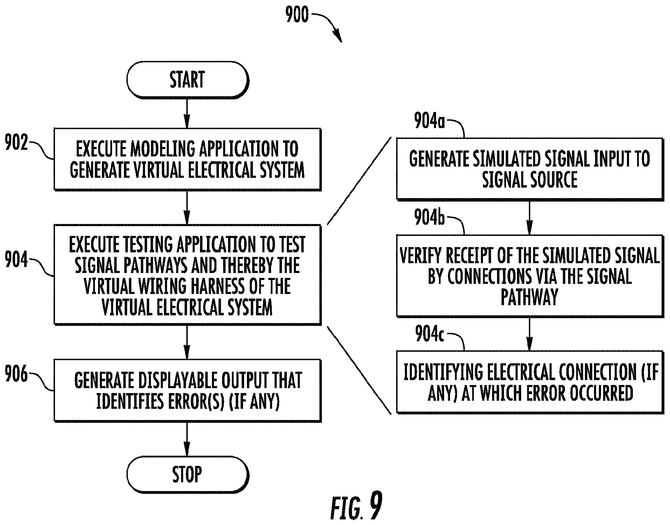

FIG. 9 is a flowchart illustrating various steps in a method **900** of testing designs of wiring harnesses. As shown at block **902,** the method includes executing a modeling application to generate a virtual electrical system including virtual wiring harnesses that interconnect virtual modules of communications circuitry including telemetry and command modules. The virtual wiring harnesses have functionality equivalent to that of the designs of wiring harnesses. The virtual modules have signal sources, signal destinations and redistribution points therebetween, and the virtual modules also have electrical connections to the signal sources, signal destinations and redistribution points. The virtual wiring harnesses are connected to the electrical connections and thereby form signal pathways through the virtual electrical system including at least the telemetry and command modules. Each signal pathway is defined by respective electrical connections to a signal source, signal destination and any redistribution point therebetween, and by at least one of the virtual wiring harnesses connected to the respective electrical connections.

As shown in block **904,** the method also includes executing a testing application to test the signal pathways and thereby the virtual wiring harnesses. This includes a number of substeps for each signal pathway having thereon specific electrical connections to a signal source, signal destination and any redistribution point therebetween. It includes the testing application generating a simulated signal that is input to the specific electrical connection at the signal source and routed through the signal pathway to the specific electrical connection to the signal destination, as shown in block **904a.** It includes the testing application verifying receipt of the simulated signal by the specific electrical connections via the signal pathway, as shown in block **904b.** And in an instance in which receipt of the simulated signal is not verified, it includes the testing application identifying a particular electrical connection of the specific electrical connections at which an error occurred in the receipt of the simulated signal, and identifying a particular virtual wiring harness and a particular virtual module respectively connected to and including the particular electrical connection, as shown in block **904c.** The testing application is also executed to further generate a displayable output that identifies for each error, the particular electrical connection at which the error occurred, and the particular virtual wiring harness and the particular virtual module respectively connected to and including the particular electrical connection, as shown in block **906.**

According to example implementations of the present disclosure, the system **100** and its subsystems including the communications module subsystem **102** and the wiring harness subsystem **104** may be implemented by various means. Means for implementing the system and its subsystems may include hardware, alone or under direction of one or more computer programs from a computer-readable storage medium. In some examples, one or more apparatuses may be configured to function as or otherwise implement the system and its subsystems shown and described herein. In examples involving more than one apparatus, the respective apparatuses may be connected to or otherwise in communication with one another in a number of different manners, such as directly or indirectly via a wired or wireless network or the like.

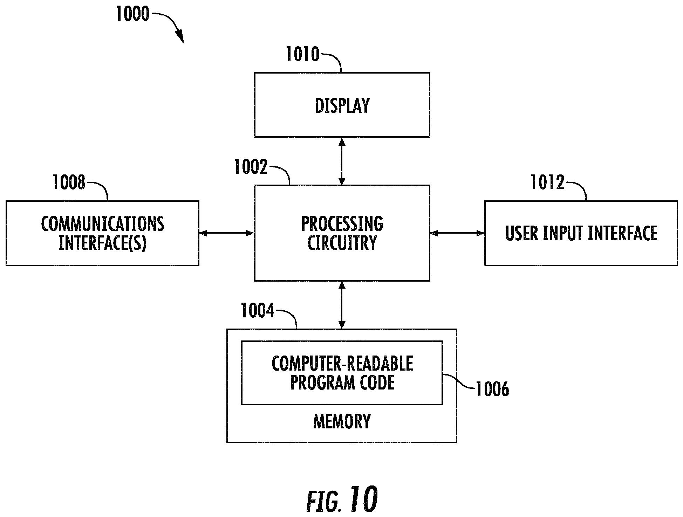

FIG. 10 illustrates an apparatus **1000** according to some example implementations of the present disclosure. Generally, an apparatus of exemplary implementations of the present disclosure may comprise, include or be embodied in one or more fixed or portable electronic devices. Examples of suitable electronic devices include a smartphone, tablet computer, laptop computer, desktop computer, workstation computer, server computer or the like. The apparatus may include one or more of each of a number of components such as, for example, a processor **1002** (e.g., processor unit) connected to a memory **1004** (e.g., storage device).

The processor **1002** may be composed of one or more processors alone or in combination with one or more memories. The processor is generally any piece of computer hardware that is capable of processing information such as, for example, data, computer programs and/or other suitable electronic information. The processor is composed of a collection of electronic circuits some of which may be packaged as an integrated circuit or multiple interconnected integrated circuits (an integrated circuit at times more commonly referred to as a "chip"). The processor may be configured to execute computer programs, which may be stored onboard the processor or otherwise stored in the memory **1004** (of the same or another apparatus).

The processor **1002** may be a number of processors, a multi-core processor or some other type of processor, depending on the particular implementation. Further, the processor may be implemented using a number of heterogeneous processor systems in which a main processor is present with one or more secondary processors on a single chip. As another illustrative example, the processor may be a symmetric multi-processor system containing multiple processors of the same type. In yet another example, the processor may be embodied as or otherwise include one or more ASICs, FPGAs or the like. Thus, although the processor may be capable of executing a computer program to perform one or more functions, the processor of various examples may be capable of performing one or more functions without the aid of a computer program. In either instance, the processor may be appropriately programmed to perform functions or operations according to example implementations of the present disclosure.

The memory **1004** is generally any piece of computer hardware that is capable of storing information such as, for example, data, computer programs (e.g., computer-readable program code **1006)** and/or other suitable information either on a temporary basis and/or a permanent basis. According to example implementations, this may include the modeling application **202** and the testing application **204.** The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory **1004,** the processor **1002** may also be connected to one or more interfaces for displaying, transmitting and/or receiving information. The interfaces may include a communications interface **1008** (e.g., communications unit) and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display **1010** and/or one or more user input interfaces **1012** (e.g., input/output unit). The display may be configured to present or otherwise display information to a user, suitable examples of which include a liquid crystal display (LCD), light-emitting diode display (LED), plasma display panel (PDP) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As indicated above, program code instructions may be stored in memory, and executed by processor that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processor or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processor or other programmable apparatus to configure the computer, processor or other programmable apparatus to execute operations to be performed on or by the computer, processor or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor or other programmable apparatus provide operations for implementing functions described herein.

Execution of instructions by processor, or storage of instructions in a computer-readable storage medium, supports combinations of operations for performing the specified functions. In this manner, an apparatus **1000** may include processor **1002** and a computer-readable storage medium or memory **1004** coupled to the processor, where the processor is configured to execute computer-readable program code **1006** stored in the memory. It will also be understood that one or more functions, and combinations of functions, may be implemented by special purpose hardware-based computer systems and/or processor which perform the specified functions, or combinations of special purpose hardware and program code instructions.

Also provided are the following illustrative, non-exhaustive examples:
An apparatus of any preceding or any subsequent example implementation, or any combination thereof, wherein the modeling application is implemented by a harness validation tool configured to create a directed graph that serves as the virtual electrical system, the directed graph including vertices and edges, each vertex representing virtual module with one or more electrical connections, and each edge representing a wire of a virtual wiring harness between electrical connections.
An apparatus of any preceding or any subsequent example implementation, or any combination thereof, wherein the harness validation tool is configured to use the virtual modules to add multiple edges to the directed graph as well as routing electrical connections.

An apparatus of any preceding or any subsequent example implementation, or any combination thereof, wherein the testing application is implemented by a harness validation tool configured to test the signal pathways according to a suite of test cases each of which is a representation of a signal sent through the system from a signal source.

An apparatus of any preceding or any subsequent example implementation, or any combination thereof, wherein the suite of test cases is exported from a satellite systems engineering database (SSED).

An apparatus of any preceding or any subsequent example implementation, or any combination thereof, wherein the harness validation tool being configured to test the signal pathways includes being configured to implement a recursive signal pathway traversal algorithm to determine all the wires of the virtual wiring harnesses traversed for a particular test case.

A method of any preceding or any subsequent example implementation, or any combination thereof, wherein the modeling application is implemented by a harness validation tool configured to create a directed graph that serves as the virtual electrical system, the directed graph including vertices and edges, each vertex representing virtual module with one or more electrical connections, and each edge representing a wire of a virtual wiring harness between electrical connections.
A method of any preceding or any subsequent example implementation, or any combination thereof, wherein the harness validation tool is configured to use the virtual modules to add multiple edges to the directed graph as well as routing electrical connections.

A method of any preceding or any subsequent example implementation, or any combination thereof, wherein the testing application is implemented by a harness validation tool configured to test the signal pathways according to a suite of test cases each of which is a representation of a signal sent through the system from a signal source.
A method of any preceding or any subsequent example implementation, or any combination thereof, wherein the suite of test cases is exported from a satellite systems engineering database (SSED).

A method of any preceding or any subsequent example implementation, or any combination thereof, wherein the harness validation tool being configured to test the signal pathways includes being configured to implement a recursive signal pathway traversal algorithm to determine all the wires of the virtual wiring harnesses traversed for a particular test case.

A computer readable storage medium of any preceding or any subsequent example implementation, or any combination thereof, wherein the virtual modules include a virtual module with a redistribution point embodied as a switch with multiple inputs and a single output, each of the multiple inputs to the single output being on a separate one of the signal pathways.

A computer readable storage medium of any preceding or any subsequent example implementation, or any combination thereof, wherein the apparatus being caused to execute the testing application to generate the displayable output includes being caused to execute the testing application to generate the displayable output that further includes for each error, routing data for the simulated signal that identifies one or more of the specific electrical connections at which the receipt of the simulated signal is verified.

A computer readable storage medium of any preceding or any subsequent example implementation, or any combination thereof, wherein the computer readable storage medium has computer-readable program code portions stored therein that, in response to execution by the processor and when the receipt of the simulated signal is not verified, cause the apparatus to further re-execute the modeling application to generate a modified virtual electrical system in which the particular virtual wiring harness has functionality equivalent to a modified design that corrects the error; and re-execute the testing application to test the signal pathways through the modified virtual electrical system.

A computer readable storage medium of any preceding or any subsequent example implementation, or any combination thereof, wherein the apparatus being caused to execute the testing application includes being caused to execute the testing application to further transmit the displayable output to a visualization tool configured to display the virtual electrical system and identify thereon the particular electrical connection at which the error occurred, and the particular virtual wiring harness and the particular virtual module respectively connected to and including the particular electrical connection.

A computer readable storage medium of any preceding or any subsequent example implementation, or any combination thereof, wherein the apparatus being caused to execute the testing application includes being caused to execute the testing application to generate the displayable output that in an instance in which receipt of the simulated signal by the specific electrical connections is verified, indicates the designs of wiring harnesses are validated for production of the wiring harnesses based thereon.

A computer readable storage medium of any preceding or any subsequent example implementation, or any combination thereof, wherein the modeling application is implemented by a harness validation tool configured to create a directed graph that serves as the virtual electrical system, the directed graph including vertices and edges, each vertex representing virtual module with one or more electrical connections, and each edge representing a wire of a virtual wiring harness between electrical connections.

A computer readable storage medium of any preceding or any subsequent example implementation, or any combination thereof, wherein the harness validation tool is configured to use the virtual modules to add multiple edges to the directed graph as well as routing electrical connections.

A computer readable storage medium of any preceding or any subsequent example implementation, or any combination thereof, wherein the testing application is implemented by a harness validation tool configured to test the signal pathways according to a suite of test cases each of which is a representation of a signal sent through the system from a signal source.

A computer readable storage medium of any preceding or any subsequent example implementation, or any combination thereof, wherein the suite of test cases is exported from a satellite systems engineering database (SSED).

A computer readable storage medium of any preceding or any subsequent example implementation, or any combination thereof, wherein the harness validation tool being configured to test the signal pathways includes being configured to implement a recursive signal pathway traversal algorithm to determine all the wires of the virtual wiring harnesses traversed for a particular test case.
As explained above, the present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

Many modifications and other implementations of the disclosure set forth herein will come to mind to one skilled in the art to which the disclosure pertains having the benefit of the teachings presented in the foregoing description and the associated drawings. Therefore, it is to be understood that the disclosure is not to be limited to the specific implementations disclosed and that modifications and other implementations are intended to be included within the scope of the appended claims. Moreover, although the foregoing description and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus for testing designs of wiring harnesses (104), the apparatus comprising a processor and a memory storing executable instructions that, in response to execution by the processor, cause the apparatus to at least:
execute a modeling application (202) to generate a virtual electrical system (206) including virtual wiring harnesses (302) that interconnect virtual modules (304) of communications circuitry including telemetry and command modules, the virtual wiring harnesses (302) having functionality equivalent to that of the designs of wiring harnesses (104), the virtual modules (304) having signal sources (306), signal destinations (308) and redistribution points therebetween, the virtual modules (304) also having electrical connections (310) to the signal sources (306), signal destinations (308) and redistribution points, and the virtual wiring harnesses (302) being connected to the electrical connections (310) and thereby forming signal pathways (312) through the virtual electrical system (206) including at least the telemetry and command modules, each signal pathway (312) being defined by respective electrical connections to a signal source (306), signal destination (308) and any redistribution point therebetween, and by at least one of the virtual wiring harnesses (302) connected to the respective electrical connections (310;
wherein the virtual modules (304) include a virtual module with a redistribution point embodied as a switch with a single input and multiple outputs, the signal input to each of the multiple outputs being on a separate one of the signal pathways (312), wherein the signal pathways (312) include redundancy within the electrical system (206) ; and
execute a testing application (204) to test the signal pathways (312) and thereby the virtual wiring harnesses (302), including for each signal pathway (312) having thereon specific electrical connections to a signal source (306), signal destination (308) and any redistribution point therebetween, the testing application being executed to at least:
generate a simulated signal that is input to the specific electrical connection at the signal source and routed through the signal pathway to the specific electrical connection to the signal destination;
verify receipt of the simulated signal by the specific electrical connections via the signal pathway; and in an instance in which receipt of the simulated signal is not verified,
identify a particular electrical connection of the specific electrical connections (310) at which an error occurred in the receipt of the simulated signal, and identify a particular virtual wiring harness (302) and a particular virtual module (304) respectively connected to and including the particular electrical connection, and
wherein the testing application is executed to further generate a displayable output that identifies for each error, the particular electrical connection at which the error occurred, and the particular virtual wiring harness and the particular virtual module respectively connected to and including the particular electrical connection.

2. The apparatus of Claim 1, wherein the virtual modules (304) include a virtual module with a redistribution point embodied as a switch with multiple inputs and a single output, each of the multiple inputs to the single output being on a separate one of the signal pathways.

3. The apparatus of any preceding Claim, wherein the apparatus being caused to execute the testing application to generate the displayable output includes being caused to execute the testing application to generate the displayable output that further includes for each error, routing data for the simulated signal that identifies one or more of the specific electrical connections at which the receipt of the simulated signal is verified.

4. The apparatus of any preceding Claim, wherein the memory stores executable instructions that, in response to execution by the processor and when the receipt of the simulated signal is not verified, cause the apparatus to further:
re-execute the modeling application to generate a modified virtual electrical system in which the particular virtual wiring harness has functionality equivalent to a modified design that corrects the error; and
re-execute the testing application to test the signal pathways through the modified virtual electrical system.

5. The apparatus of any preceding Claim, wherein the apparatus being caused to execute the testing application includes being caused to execute the testing application to further transmit the displayable output to a visualization tool configured to display the virtual electrical system and identify thereon the particular electrical connection at which the error occurred, and the particular virtual wiring harness and the particular virtual module respectively connected to and including the particular electrical connection.

6. The apparatus of any preceding Claim, wherein the apparatus being caused to execute the testing application includes being caused to execute the testing application to generate the displayable output that in an instance in which receipt of the simulated signal by the specific electrical connections is verified, indicates the designs of wiring harnesses are validated for production of the wiring harnesses based thereon.

7. A computer-implemented method of testing designs of wiring harnesses (104), the method comprising:
executing a modeling application (202) to generate a virtual electrical system (206) including virtual wiring harnesses (302) that interconnect virtual modules (304) of communications circuitry including telemetry and command modules, the virtual wiring harnesses (302) having functionality equivalent to that of the designs of wiring harnesses (104), the virtual modules (304) having signal sources (306), signal destinations (308) and redistribution points therebetween, the virtual modules (304) also having electrical connections (310) to the signal sources (306), signal destinations (308) and redistribution points, and the virtual wiring harnesses (302) being connected to the electrical connections (310) and thereby forming signal pathways (312) through the virtual electrical system (206) including at least the telemetry and command modules, each signal pathway (312) being defined by respective electrical connections (310) to a signal source (306), signal destination (308) and any redistribution point therebetween, and by at least one of the virtual wiring harnesses (302) connected to the respective electrical connections (310);
wherein the virtual modules (304) include a virtual module with a redistribution point embodied as a switch with a single input and multiple outputs, the signal input to each of the multiple outputs being on a separate one of the signal pathways (312), wherein the signal pathways (312) include redundancy within the electrical system (206); and
executing a testing application (204) to test the signal pathways (310) and thereby the virtual wiring harnesses (302), including for each signal pathway (312) having thereon specific electrical connections to a signal source, signal destination and any redistribution point therebetween, the testing application (204) at least:
generating a simulated signal that is input to the specific electrical connection at the signal source (306) and routed through the signal pathway (312) to the specific electrical connection to the signal destination (308);
verifying receipt of the simulated signal by the specific electrical connections via the signal pathway (312); and in an instance in which receipt of the simulated signal is not verified,
identifying a particular electrical connection of the specific electrical connections (310) at which an error occurred in the receipt of the simulated signal, and identifying a particular virtual wiring harness and a particular virtual module respectively connected to and including the particular electrical connection, and
wherein the testing application is executed to further generate a displayable output that identifies for each error, the particular electrical connection at which the error occurred, and the particular virtual wiring harness and the particular virtual module respectively connected to and including the particular electrical connection.

8. The method of Claim 7, wherein the virtual modules include a virtual module with a redistribution point embodied as a switch with multiple inputs and a single output, each of the multiple inputs to the single output being on a separate one of the signal pathways.

9. The method of any of Claims 7 to 8, wherein executing the testing application to generate the displayable output includes executing the testing application to generate the displayable output that further includes for each error, routing data for the simulated signal that identifies one or more of the specific electrical connections at which the receipt of the simulated signal is verified.

10. The method of any of Claims 7 to 9, wherein when the receipt of the simulated signal is not verified, the method further comprises:
re-executing the modeling application to generate a modified virtual electrical system in which the particular virtual wiring harness has functionality equivalent to a modified design that corrects the error; and
re-executing the testing application to test the signal pathways through the modified virtual electrical system.

11. The method of any of Claims 7 to 10, wherein executing the testing application includes executing the testing application to further transmit the displayable output to a visualization tool configured to display the virtual electrical system and identify thereon the particular electrical connection at which the error occurred, and the particular virtual wiring harness and the particular virtual module respectively connected to and including the particular electrical connection.

12. The method of any of Claims 7 to 11, wherein executing the testing application includes executing the testing application to generate the displayable output that in an instance in which receipt of the simulated signal by the specific electrical connections is verified, indicates the designs of wiring harnesses are validated for production of the wiring harnesses based thereon.

## Patentansprüche

1. Vorrichtung zum Testen von Designs von Kabelbäumen (104), wobei die Vorrichtung einen Prozessor und einen Speicher aufweist, der ausführbare Befehle speichert, die als Antwort auf eine Ausführung durch den Prozessor die Vorrichtung veranlassen, um mindestens:
- eine Modellierungsanwendung (202) auszuführen, um ein virtuelles elektrisches System (206) zu generieren, das virtuelle Kabelbäume (302) aufweist, die virtuelle Kommunikationsschaltungsmodule (304), einschließlich Telemetrie- und Befehlsmodule, miteinander verbinden, wobei die virtuellen Kabelbäume (302) eine Funktionalität haben, die derjenigen der Designs von Kabelbäumen (104) äquivalent ist, wobei die virtuellen Module (304) Signalquellen (306), Signaldestinationen (308) und dazwischen Redistributionspunkte haben, wobei die virtuellen Module (304) außerdem elektrische Verbindungen (310) mit den Signalquellen (306), Signaldestinationen (308) und Redistributionspunkten haben, und die virtuellen Kabelbäume (302) mit den elektrischen Verbindungen (310) verbunden sind und dadurch Signalpfade (312) durch das virtuelle elektrische System (206), das mindestens die Telemetrie- und Befehlsmodule aufweist, bilden, wobei jeder Signalpfad (312) durch jeweilige elektrische Verbindungen mit einer Signalquelle (306), Signaldestination (308) und irgendeinem Redistributionspunkt dazwischen und durch mindestens einen der virtuellen Kabelbäume (302), der mit den jeweiligen elektrischen Verbindungen (310) verbunden ist, definiert ist;
wobei die virtuellen Module (304) ein virtuelles Modul mit einem Redistributionspunkt aufweisen, der als ein Schalter mit einem einzigen Eingang und mehreren Ausgängen verkörpert ist, wobei der Signaleingang zu jedem der mehreren Ausgänge auf einem separaten der Signalpfade (312) ist, wobei die Signalpfade (312) Redundanz innerhalb des elektrischen Systems (206) aufweisen; und
- eine Testanwendung (204) auszuführen, um die Signalpfade (312) und dadurch die virtuellen Kabelbäume (302) zu testen, einschließlich: wobei für jeden Signalpfad (312), der spezifische elektrische Verbindungen mit einer Signalquelle (306), Signaldestination (308) und irgendeinem Redistributionspunkt dazwischen darauf hat, die Testanwendung ausgeführt wird, um mindestens:
ein simuliertes Signal zu erzeugen, das an der Signalquelle in die spezifische elektrische Verbindung eingegeben wird und durch den Signalpfad hindurch geleitet wird zu der spezifischen elektrischen Verbindung mit der Signaldestination;
einen Empfang des simulierten Signals durch die spezifischen elektrischen Verbindungen über den Signalpfad zu verifizieren; und in einem Fall, dass der Empfang des simulierten Signals nicht verifiziert wird,
eine spezielle elektrische Verbindung der spezifischen elektrischen Verbindungen (310) zu identifizieren, an der im Empfang des simulierten Signals ein Fehler auftrat, und einen speziellen virtuellen Kabelbaum (302) und ein spezielles virtuelles Modul (304) zu identifizieren, die mit der speziellen elektrischen Verbindung verbunden sind bzw. diese enthalten,
wobei die Testanwendung ausgeführt wird, um desweiteren eine darstellbare Ausgabe zu generieren, die für jeden Fehler die spezielle elektrische Verbindung, an der der Fehler auftrat, und den speziellen virtuellen Kabelbaum und das spezielle virtuelle Modul, die mit der speziellen elektrischen Verbindung verbunden sind bzw. diese enthalten, identifiziert.

2. Vorrichtung nach Anspruch 1, wobei die virtuellen Module (304) ein virtuelles Modul mit einem Redistributionspunkt aufweisen, der als ein Schalter mit mehreren Eingängen und einem einzigen Ausgang verkörpert ist, wobei jeder der mehreren Eingänge zu dem einzigen Ausgang auf einem separaten der Signalpfade ist.

3. Vorrichtung nach einem der vorstehenden Ansprüche, wobei "die Vorrichtung veranlasst wird, die Testanwendung auszuführen, um die darstellbare Ausgabe zu generieren" aufweist: veranlasst wird, die Testanwendung auszuführen, um die darstellbare Ausgabe zu generieren, die desweiteren für jeden Fehler Durchleitungsdaten für das simulierte Signal aufweist, die eine oder mehrere der spezifischen elektrischen Verbindungen identifizieren, an der oder denen der Empfang des simulierten Signals verifiziert ist.

4. Vorrichtung nach einem der vorstehenden Ansprüche, wobei der Speicher ausführbare Befehle speichert, die als Antwort auf eine Ausführung durch den Prozessor und wenn der Empfang des simulierten Signals nicht verifiziert ist, die Vorrichtung veranlassen, um desweiteren:
die Modellierungsanwendung erneut auszuführen, um ein modifiziertes virtuelles elektrisches System zu generieren, in dem der spezielle virtuelle Kabelbaum eine Funktionalität hat, die äquivalent zu einem modifizierten Design ist, das den Fehler korrigiert; und
die Testanwendung erneut auszuführen, um die Signalpfade durch das modifizierte virtuelle elektrische System zu testen.

5. Vorrichtung nach einem der vorstehenden Ansprüche, wobei "die Vorrichtung veranlasst wird, die Testanwendung auszuführen" aufweist: veranlasst wird, die Testanwendung auszuführen, um desweiteren die darstellbare Ausgabe zu einem Visualisierungswerkzeug zu senden, das konfiguriert ist, um das virtuelle elektrische System darzustellen und daran die spezielle elektrische Verbindung, an der der Fehler auftrat, und den speziellen virtuellen Kabelbaum und das spezielle virtuelle Modul, die mit der speziellen elektrischen Verbindung verbunden sind bzw. diese enthalten, zu identifizieren.

6. Vorrichtung nach einem der vorstehenden Ansprüche, wobei "die Vorrichtung veranlasst wird, die Testanwendung auszuführen" aufweist: veranlasst wird, die Testanwendung auszuführen, um die darstellbare Ausgabe zu generieren, die in einem Fall, dass ein Empfang des simulierten Signals durch die spezifischen elektrischen Verbindungen verifiziert ist, anzeigt, dass die Designs von Kabelbäumen validiert sind für eine Produktion der Kabelbäume auf dieser Basis.

7. Computerimplementiertes Verfahren zum Testen von Designs von Kabelbäumen (104), wobei das Verfahren aufweist:
- Ausführen einer Modellierungsanwendung (202), um ein virtuelles elektrisches System (206) zu generieren, das virtuelle Kabelbäume (302) aufweist, die virtuelle Kommunikationsschaltungsmodule (304), einschließlich Telemetrie- und Befehlsmodule, miteinander verbinden, wobei die virtuellen Kabelbäume (302) eine Funktionalität haben, die derjenigen der Designs von Kabelbäumen (104) äquivalent ist, wobei die virtuellen Module (304) Signalquellen (306), Signaldestinationen (308) und dazwischen Redistributionspunkte haben, wobei die virtuellen Module (304) außerdem elektrische Verbindungen (310) mit den Signalquellen (306), Signaldestinationen (308) und Redistributionspunkten haben, und die virtuellen Kabelbäume (302) mit den elektrischen Verbindungen (310) verbunden sind und dadurch Signalpfade (312) durch das virtuelle elektrische System (206), das mindestens die Telemetrie- und Befehlsmodule aufweist, bilden, wobei jeder Signalpfad (312) durch jeweilige elektrische Verbindungen (310) mit einer Signalquelle (306), Signaldestination (308) und irgendeinem Redistributionspunkt dazwischen und durch mindestens einen der virtuellen Kabelbäume (302), der mit den jeweiligen elektrischen Verbindungen (310) verbunden ist, definiert ist;
wobei die virtuellen Module (304) ein virtuelles Modul mit einem Redistributionspunkt aufweisen, der als ein Schalter mit einem einzigen Eingang und mehreren Ausgängen verkörpert ist, wobei der Signaleingang zu jedem der mehreren Ausgänge auf einem separaten der Signalpfade (312) ist, wobei die Signalpfade (312) Redundanz innerhalb des elektrischen Systems (206) aufweisen; und
- Ausführen einer Testanwendung (204), um die Signalpfade (310) und dadurch die virtuellen Kabelbäume (302) zu testen, einschließlich: wobei für jeden Signalpfad (312), der spezifische elektrische Verbindungen mit einer Signalquelle, Signaldestination und irgendeinem Redistributionspunkt dazwischen darauf hat, die Testanwendung (204) mindestens:
ein simuliertes Signal erzeugt, das an der Signalquelle (306) in die spezifische elektrische Verbindung eingegeben wird und durch den Signalpfad (312) hindurch geleitet wird zu der spezifischen elektrischen Verbindung mit der Signaldestination (308);
einen Empfang des simulierten Signals durch die spezifischen elektrischen Verbindungen über den Signalpfad (312) verifiziert; und in einem Fall, dass der Empfang des simulierten Signals nicht verifiziert wird,
eine spezielle elektrische Verbindung der spezifischen elektrischen Verbindungen (310) identifiziert, an der im Empfang des simulierten Signals ein Fehler auftrat, und einen speziellen virtuellen Kabelbaum und ein spezielles virtuelles Modul identifiziert, die mit der speziellen elektrischen Verbindung verbunden sind bzw. diese enthalten, und
wobei die Testanwendung ausgeführt wird, um desweiteren eine darstellbare Ausgabe zu generieren, die für jeden Fehler die spezielle elektrische Verbindung, an der der Fehler auftrat, und den speziellen virtuellen Kabelbaum und das spezielle virtuelle Modul, die mit der speziellen elektrischen Verbindung verbunden sind bzw. diese enthalten, identifiziert.

8. Verfahren nach Anspruch 7, wobei die virtuellen Module ein virtuelles Modul mit einem Redistributionspunkt aufweisen, der als ein Schalter mit mehreren Eingängen und einem einzigen Ausgang verkörpert ist, wobei jeder der mehreren Eingänge zu dem einzigen Ausgang auf einem separaten der Signalpfade ist.

9. Verfahren nach einem der Ansprüche 7 oder 8, wobei Ausführen der Testanwendung, um die darstellbare Ausgabe zu generieren, aufweist: Ausführen der Testanwendung, um die darstellbare Ausgabe zu generieren, die desweiteren für jeden Fehler Durchleitungsdaten für das simulierte Signal aufweist, die eine oder mehrere der spezifischen elektrischen Verbindungen identifizieren, an der oder denen der Empfang des simulierten Signals verifiziert ist.

10. Verfahren nach einem der Ansprüche 7 bis 9, wobei, wenn der Empfang des simulierten Signals nicht verifiziert wird, das Verfahren desweiteren aufweist:
erneutes Ausführen der Modellierungsanwendung, um ein modifiziertes virtuelles elektrisches System zu generieren, in dem der spezielle virtuelle Kabelbaum eine Funktionalität hat, die äquivalent zu einem modifizierten Design ist, das den Fehler korrigiert; und
erneutes Ausführen der Testanwendung, um die Signalpfade durch das modifizierte virtuelle elektrische System zu testen.

11. Verfahren nach einem der Ansprüche 7 bis 10, wobei Ausführen der Testanwendung aufweist: Ausführen der Testanwendung, um desweiteren die darstellbare Ausgabe zu einem Visualisierungswerkzeug zu senden, das konfiguriert ist, um das virtuelle elektrische System darzustellen und daran die spezielle elektrische Verbindung, an der der Fehler auftrat, und den speziellen virtuellen Kabelbaum und das spezielle virtuelle Modul, die mit der speziellen elektrischen Verbindung verbunden sind bzw. diese enthalten, zu identifizieren.

12. Verfahren nach einem der Ansprüche 7 bis 11, wobei Ausführen der Testanwendung aufweist: Ausführen der Testanwendung, um die darstellbare Ausgabe zu generieren, die in einem Fall, dass ein Empfang des simulierten Signals durch die spezifischen elektrischen Verbindungen verifiziert ist, anzeigt, dass die Designs von Kabelbäumen validiert sind für eine Produktion der Kabelbäume auf dieser Basis.

## Revendications

1. Appareil pour le test de conceptions de faisceaux de câblage (104), l'appareil comprenant un processeur et une mémoire stockant des instructions exécutables qui, en réponse à leur exécution par le processeur, amènent l'appareil à au moins :
exécuter une application de modélisation (202) pour générer un système électrique virtuel (206) comportant des faisceaux de câblage virtuels (302) qui connectent entre eux des modules virtuels (304) de circuiteries de communication comportant des modules de télémétrie et de commande, les faisceaux de câblage virtuels (302) ayant une fonctionnalité équivalente à celle des conceptions de faisceaux de câblage (104), les modules virtuels (304) ayant des sources de signal (306), des destinations de signal (308) et des points de redistribution entre elles, les modules virtuels (304) ayant également des connexions électriques (310) avec les sources de signal (306), les destinations de signal (308) et les points de redistribution, et les faisceaux de câblage virtuels (302) étant connectés aux connexions électriques (310) et formant ainsi des voies de signal (312) à travers le système électrique virtuel (206) comportant au moins les modules de télémétrie et de commande, chaque voie de signal (312) étant définie par des connexions électriques respectives avec une source de signal (306), une destination de signal (308) et un quelconque point de redistribution entre elles, et par au moins l'un des faisceaux de câblage virtuels (302) connecté aux connexions électriques (310) respectives ;
dans lequel les modules virtuels (304) comportent un module virtuel ayant un point de redistribution se présentant sous la forme d'un commutateur à entrée unique et sorties multiples, l'entrée de signal vers chacune des multiples sorties étant sur une voie séparée parmi les voies de signal (312), dans lequel les voies de signal (312) comportent une redondance au sein du système électrique (206) ; et
exécuter une application de test (204) pour tester les voies de signal (312) et ainsi les faisceaux de câblage virtuels (302), comportant pour chaque voie de signal (312) ayant sur celle-ci des connexions électriques spécifiques avec une source de signal (306), une destination de signal (308) et un quelconque point de redistribution entre elles, l'application de test qui est exécutée pour au moins :
générer un signal simulé qui est entré sur la connexion électrique spécifique au niveau de la source de signal et acheminé, par le biais de la voie de signal vers la connexion électrique spécifique, vers la destination de signal ;
vérifier la réception du signal simulé par les connexions électriques spécifiques via la voie de signal ; et dans un cas dans lequel la réception du signal simulé n'est pas vérifiée,
identifier une connexion électrique particulière des connexions électriques (310) spécifiques au niveau de laquelle une erreur est survenue dans la réception du signal simulé, et identifier un faisceau de câblage virtuel (302) particulier et un module virtuel (304) particulier respectivement connectés à et comportant la connexion électrique particulière, et
dans lequel l'application de test est exécutée pour générer en outre une sortie affichable qui identifie, pour chaque erreur, la connexion électrique particulière au niveau de laquelle l'erreur est survenue, et le faisceau de câblage virtuel particulier et
le module virtuel particulier respectivement connectés à et comportant la connexion électrique particulière.

2. Appareil selon la revendication 1, dans lequel les modules virtuels (304) comportent un module virtuel ayant un point de redistribution se présentant sous la forme d'un commutateur à entrées multiples et sortie unique, chacune des entrées multiples vers la sortie unique étant sur une voie séparée parmi les voies de signal.

3. Appareil selon une quelconque revendication précédente, dans lequel l'appareil étant amené à exécuter l'application de test pour générer la sortie affichable comporte le fait d'être amené à exécuter l'application de test pour générer la sortie affichable qui comporte en outre, pour chaque erreur, des données d'acheminement pour le signal simulé qui identifient l'une ou plusieurs des connexions électriques spécifiques au niveau desquelles la réception du signal simulé est vérifiée.

4. Appareil selon une quelconque revendication précédente, dans lequel la mémoire stocke des instructions exécutables qui, en réponse à leur exécution par le processeur et lorsque la réception du signal simulé n'est pas vérifiée, amènent l'appareil à en outre :
exécuter à nouveau l'application de modélisation pour générer un système électrique virtuel modifié dans lequel le faisceau de câblage virtuel particulier possède une fonctionnalité équivalente à une conception modifiée qui corrige l'erreur ; et
exécuter à nouveau l'application de test pour tester les voies de signal à travers le système électrique virtuel modifié.

5. Appareil selon une quelconque revendication précédente, dans lequel l'appareil étant amené à exécuter l'application de test comporte le fait d'être amené à exécuter l'application de test pour transmettre en outre la sortie affichable à un outil de visualisation configuré pour afficher le système électrique virtuel et identifier sur celui-ci la connexion électrique particulière au niveau de laquelle l'erreur est survenue, et le faisceau de câblage virtuel particulier et le module virtuel particulier respectivement connectés à et comportant la connexion électrique particulière.

6. Appareil selon une quelconque revendication précédente, dans lequel l'appareil étant amené à exécuter l'application de test comporte le fait d'être amené à exécuter l'application de test pour générer la sortie affichable qui, dans un cas dans lequel la réception du signal simulé par les connexions électriques spécifiques est vérifiée, indique que les conceptions de faisceaux de câblage sont validées pour la production des faisceaux de câblage basés sur celles-ci.

7. Procédé mis en œuvre par ordinateur de test de conceptions de faisceaux de câblage (104), le procédé comprenant :
l'exécution d'une application de modélisation (202) pour générer un système électrique virtuel (206) comportant des faisceaux de câblage virtuels (302) qui connectent entre eux des modules virtuels (304) de circuiteries de communication comportant des modules de télémétrie et de commande, les faisceaux de câblage virtuels (302) ayant une fonctionnalité équivalente à celle des conceptions de faisceaux de câblage (104), les modules virtuels (304) ayant des sources de signal (306), des destinations de signal (308) et des points de redistribution entre elles, les modules virtuels (304) ayant également des connexions électriques (310) avec les sources de signal (306), les destinations de signal (308) et les points de redistribution, et les faisceaux de câblage virtuels (302) étant connectés aux connexions électriques (310) et formant ainsi des voies de signal (312) à travers le système électrique virtuel (206) comportant au moins les modules de télémétrie et de commande, chaque voie de signal (312) étant définie par des connexions électriques (310) respectives avec une source de signal (306), une destination de signal (308) et un quelconque point de redistribution entre elles, et par au moins l'un des faisceaux de câblage virtuels (302) connecté aux connexions électriques (310) respectives ;
dans lequel les modules virtuels (304) comportent un module virtuel ayant un point de redistribution se présentant sous la forme d'un commutateur à entrée unique et sorties multiples, l'entrée de signal vers chacune des multiples sorties étant sur une voie séparée parmi les voies de signal (312), dans lequel les voies de signal (312) comportent une redondance au sein du système électrique (206) ; et
l'exécution d'une application de test (204) pour tester les voies de signal (310) et ainsi les faisceaux de câblage virtuels (302), comportant pour chaque voie de signal (312) ayant sur celle-ci des connexions électriques spécifiques avec une source de signal, une destination de signal et un quelconque point de redistribution entre elles, l'application de test (204) au moins :
générant un signal simulé qui est entré sur la connexion électrique spécifique au niveau de la source de signal (306) et acheminé, par le biais de la voie de signal (312) vers la connexion électrique spécifique, vers la destination de signal (308) ;
vérifiant la réception du signal simulé par les connexions électriques spécifiques via la voie de signal (312) ; et dans un cas dans lequel la réception du signal simulé n'est pas vérifiée,
identifiant une connexion électrique particulière des connexions électriques (310) spécifiques au niveau de laquelle une erreur est survenue dans la réception du signal simulé, et identifiant un faisceau de câblage virtuel particulier et un module virtuel particulier respectivement connectés à et comportant la connexion électrique particulière, et
dans lequel l'application de test est exécutée pour générer en outre une sortie affichable qui identifie, pour chaque erreur, la connexion électrique particulière au niveau de laquelle l'erreur est survenue, et le faisceau de câblage virtuel particulier et le module virtuel particulier respectivement connectés à et comportant la connexion électrique particulière.

8. Procédé selon la revendication 7, dans lequel les modules virtuels comportent un module virtuel ayant un point de redistribution se présentant sous la forme d'un commutateur à entrées multiples et sortie unique, chacune des entrées multiples vers la sortie unique étant sur une voie séparée parmi les voies de signal.

9. Procédé selon l'une quelconque des revendications 7 et 8, dans lequel l'exécution de l'application de test pour générer la sortie affichable comporte l'exécution de l'application de test pour générer la sortie affichable qui comporte en outre, pour chaque erreur, des données d'acheminement pour le signal simulé qui identifient l'une ou plusieurs des connexions électriques spécifiques au niveau desquelles la réception du signal simulé est vérifiée.

10. Procédé selon l'une quelconque des revendications 7 à 9, dans lequel lorsque la réception du signal simulé n'est pas vérifiée, le procédé comprend en outre :
l'exécution, à nouveau, de l'application de modélisation pour générer un système électrique virtuel modifié dans lequel le faisceau de câblage virtuel particulier possède une fonctionnalité équivalente à une conception modifiée qui corrige l'erreur ; et
l'exécution, à nouveau, de l'application de test pour tester les voies de signal à travers le système électrique virtuel modifié.

11. Procédé selon l'une quelconque des revendications 7 à 10, dans lequel l'exécution de l'application de test comporte l'exécution de l'application de test pour transmettre en outre la sortie affichable à un outil de visualisation configuré pour afficher le système électrique virtuel et identifier sur celui-ci la connexion électrique particulière au niveau de laquelle l'erreur est survenue, et le faisceau de câblage virtuel particulier et le module virtuel particulier respectivement connectés à et comportant la connexion électrique particulière.

12. Procédé selon l'une quelconque des revendications 7 à 11, dans lequel l'exécution de l'application de test comporte l'exécution de l'application de test pour générer la sortie affichable qui, dans un cas dans lequel la réception du signal simulé par les connexions électriques spécifiques est vérifiée, indique que les conceptions de faisceaux de câblage sont validées pour la production des faisceaux de câblage basés sur celles-ci.
